# EUROPEAN PATENT APPLICATION

(11) **EP 2 187 586 A1**
(43) Date of publication of application: **19.05.2010**
(21) Application number: 08253730.9
(22) Date of filing: 14.11.2008
(51) Int. Cl.: H04L 12/58

(54) **Facilitating the transmission of electronic mail**

(71) Applicant: Zeus Technology Limited, Cambridge CB4 0WS (GB)
(72) Inventor: Boddington, Mark, Sandy Bedfordshire SG19 1ET (GB); Bond, Nicholas, Frinton-on-Sea Essex CO13 9ED (GB)
(74) Representative: Atkinson, Ralph

(57) **Abstract**

The transmission of electronic mail is facilitated through a distributed network such as the Internet. An original electronic mail communication is received (601) at a first location within the distributed network. Data files attached to the electronic mail communications are identified (602) at the first location. One or more of the identified attachments is selected (603) for compression. The selected attachments are compressed (605) and the selected attachments are replaced (606) in the original communication with the compressed attachments to produce a modified communication which is transmitted to a second location within the network.

## Description

### CROSS REFERENCE TO RELATED APPLICATIONS

This application represents the first application for a patent directed towards the invention and the subject matter.

### BACKGROUND OF THE INVENTION

### 1. Field of the Invention

The present invention relates to a traffic management apparatus for connection within a data transmission network so as to manage the distribution of data traffic between a plurality of data serving and data relaying devices.

The present invention also relates to a method of facilitating the transmission of electronic mail communications through a distributed network such as the Internet.

The present invention also relates to a computer-readable medium having computer-readable instructions executable by a computer.

### 2. Description of the Related Art

Systems for the creation and distribution of electronic mail are well known and well established. It is known to include mail servers connected to the Internet which effectively store and forward mail messages. Thus, an electronic mail system may be considered in terms of its storage requirements and its transmission bandwidth between nodes.

Traffic management systems are known as described in British patent number 2 413 868 (US patent application 11/124,807) and British patent number 2 414 136 (US application 11/124,835). These systems are directed towards the management of traffic over the Internet.

### BRIEF SUMMARY OF THE INVENTION

According to an aspect of the present invention, there is provided a traffic management apparatus of the aforesaid type, characterised as set out in claim 1.

According to a second aspect of the present invention, there is provided a method of facilitating the transmission of electronic mail communications of the aforesaid type, as set out in claim 7.

According to a third aspect of the present invention, there is provided a computer-readable medium of the aforesaid type as set out in claim 13.

### BRIEF DESCRIPTION OF THE SEVERAL VIEWS OF THE DRAWINGS

Figure 1 shows an environment for the transmission of electronic mail communications;
Figure 2 illustrates the environment of Figure 1 embodying the present invention;
Figure 3 shows a portion of a distributed communications network;
Figure 4 illustrates a first embodiment in which compression procedures are performed at a server;
Figure 5 illustrates an alternative embodiment in which procedures are implemented within a traffic management apparatus;
Figure 6 shows a hardware platform for the traffic management system identified in Figure 5;
Figure 7 illustrates the functionality of the environment illustrated in Figure 5; and
Figure 8 shows the procedures performed within the embodiment of Figure 7.

### DESCRIPTION OF PREFERRED EMBODIMENTS OF THE INVENTION

Embodiments of the invention will be described by way of example only. As such, this description should not be considered as limiting the scope of the invention, which is as set out in the appended claims.

### Figure 1

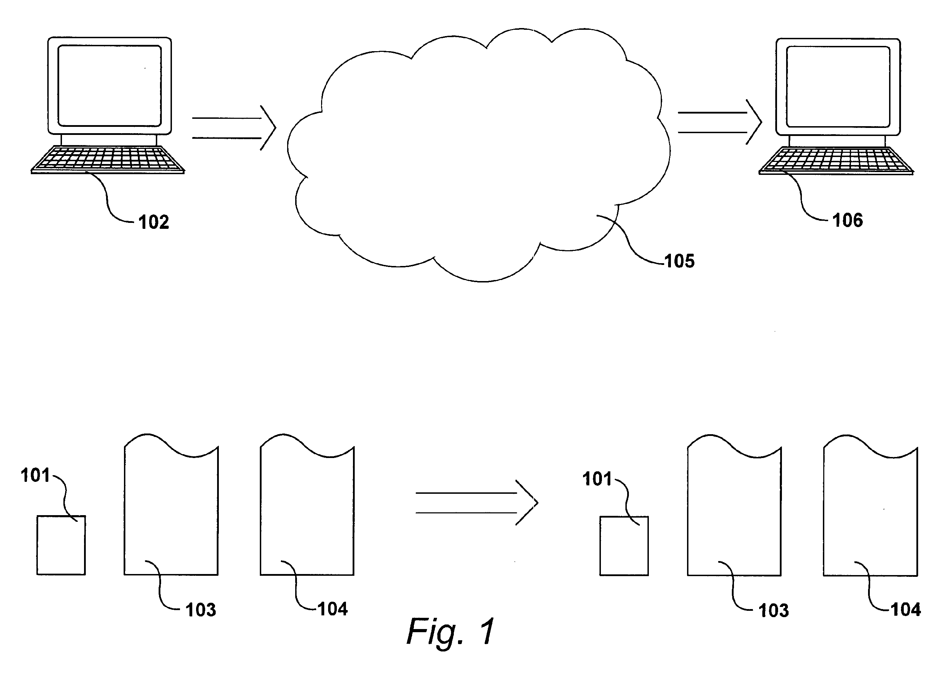

An environment for the transmission of electronic mail communications through a distributed network (such as the Internet) is illustrated in Figure 1. An electronic mail communication 101 is generated at an originating station 102. In addition to the text of the email communication 101, the communication also includes a first file attachment 103 and a second file attachment 104.

Communication takes place through a distributed network 105 (such as the Internet) resulting in the communication being received at a receiving station 106. In accordance with this process, the original electronic communication 101 is received, along with its first attachment 103 and its second attachment 104.

### Figure 2

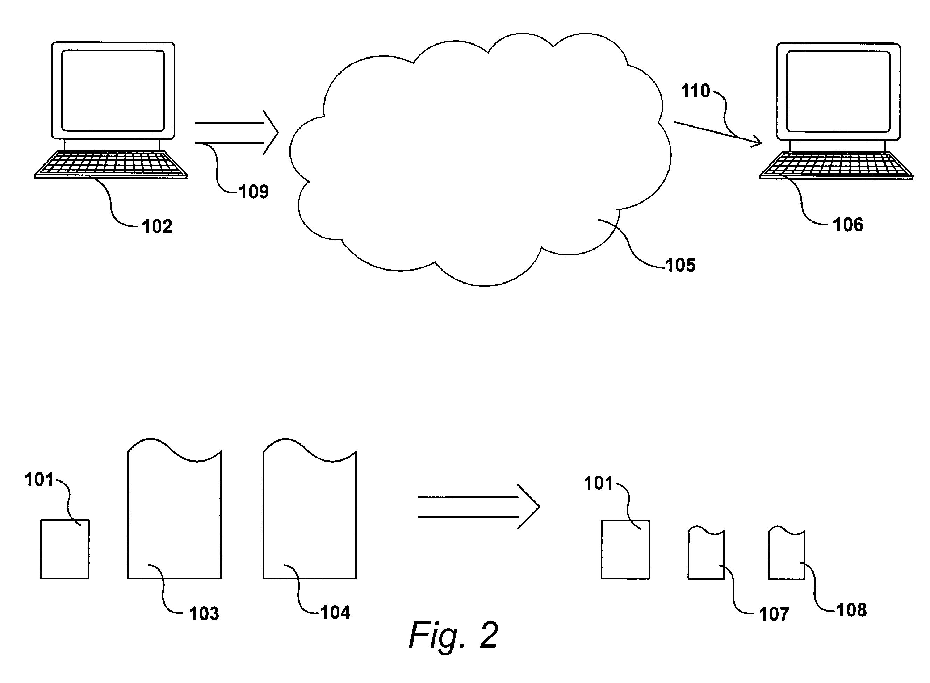

An embodiment of the invention is illustrated in Figure 2 in which the same electronic communication 101 with its first attachment 103 and its second attachment 104 has been transmitted from originating station 102 via the network 105 to the receiving station 106.

At the receiving station 106 the electronic communication 101 has been received. However, although the information contained within attachments 103 and 104 has been received, the actual data contained therein has been compressed such that instead of receiving full bandwidth files 103 and 104, compressed files 107 and 108 have been received.

The original transmission of the communication to network 105 is illustrated by large arrow 109, representing a communication that requires a relatively high bandwidth. However, the communication from the network 105 to the receiving station 106 is illustrated as a small arrow 110, representing the reduction in bandwidth requirement for the transmission of the compressed files 107, 108.

### Figure 3

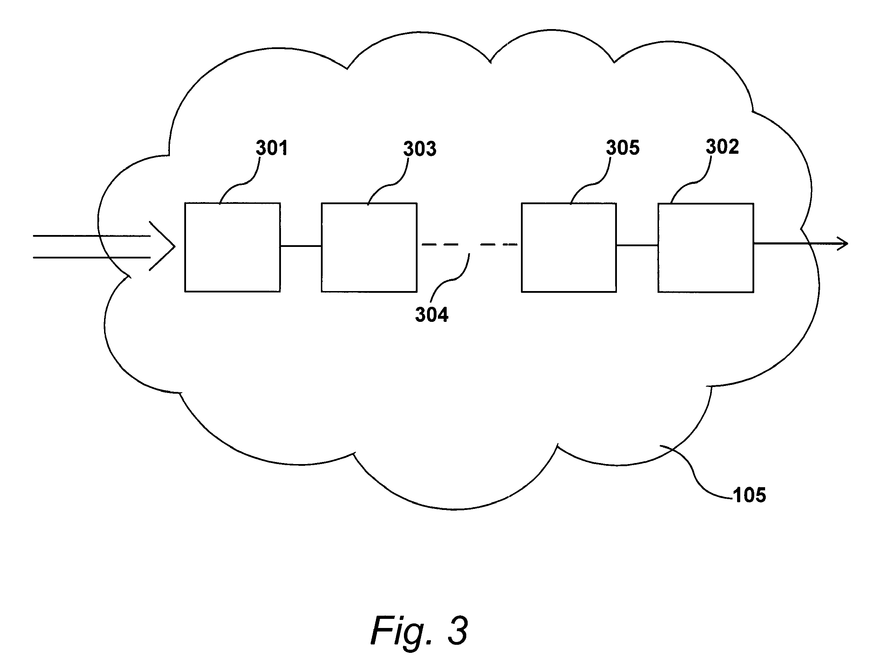

A portion of the distributed communications network 105 is illustrated in Figure 3. A first node or location 301 may be considered to represent an email server that provides email services to the originator 102. Similarly, location 302 may be considered as an email server providing email services to the receiving station 106. Many additional nodes or locations are included within the network 105 and a selection of these locations will be called upon to effect the transmission of the communication through the network. Thus, additional nodes or servers within the network effectively perform a store and forward procedure for the electronic communication and as such their transmission may take place under the control of various technical processes primarily aimed at enhancing the overall efficiency of the network. Thus, for illustrative purposes, the communication is shown being received at a second node 303 after being handled by the first location 301. Communication takes place through a variety of nodes, illustrated by broken line 304, before being received at a third node 304 which in turn passes the communication to the server 302 providing services to the receiving station 106.

### Figure 4

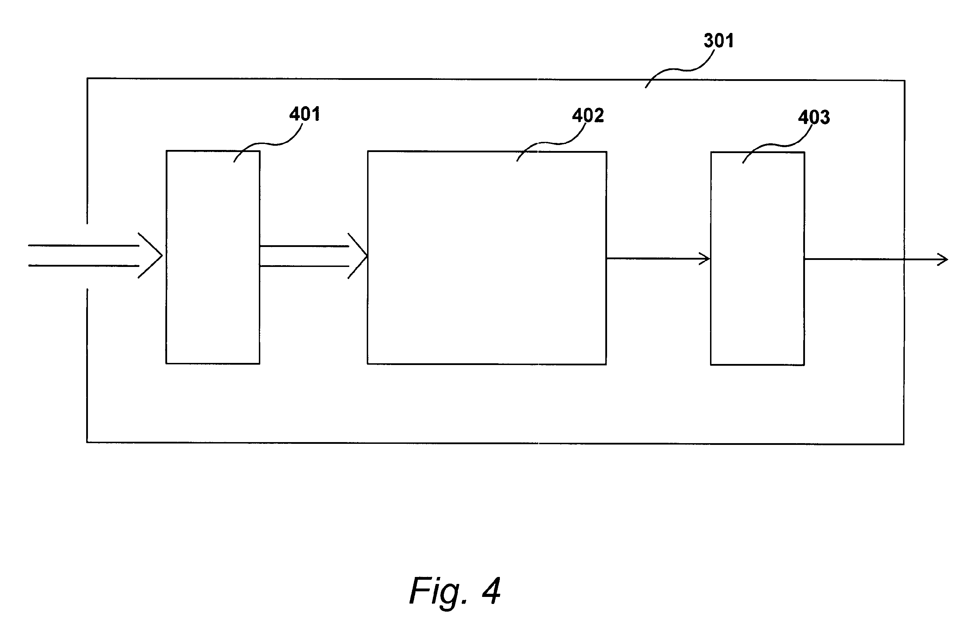

In a first embodiment, compression procedures are effected at server 301, this being the server that provides electronic mail services to the originator. Email server 301 is detailed in Figure 4.

An input device 401 is configured to receive an original electronic mail communication which, for the purposes of this illustration, it is assumed to contain a plurality of file attachments, such as file attachments 103 and 104. A processing device 402 is configured to identify one or more of the file attachments and to select one or more of the file attachments for compression. The processing device 402 is then configured to compress the selected attachment or attachments and to replace these selected attachments with the compressed versions so as to produce a modified communication.

An output device 403 is arranged to convey the modified electronic mail communication with the compressed attachments to a receiving server. Thus, in this preferred embodiment, output device 403 would be arranged to transmit the modified communication to location 303.

In an alternative embodiment, the compression procedures are performed within the core of the network 105 such that, for example, the compression procedures could be effected at location 303 or at location 305.

In an alternative embodiment, the compression procedures are effected at a mail server (mail server 303) that provides electronic mail services to the receiving station 106. However, it can be appreciated that greater benefit is derived from the compression process if it can be performed as soon as possible, therefore a preferred platform is the originating email server 301.

### Figure 5

In a preferred embodiment, the compression procedures are implemented within a traffic management apparatus in which the traffic management apparatus itself is configured for collection within a data transmission network so as to manage the distribution of data traffic between a plurality of data serving and data relaying devices.

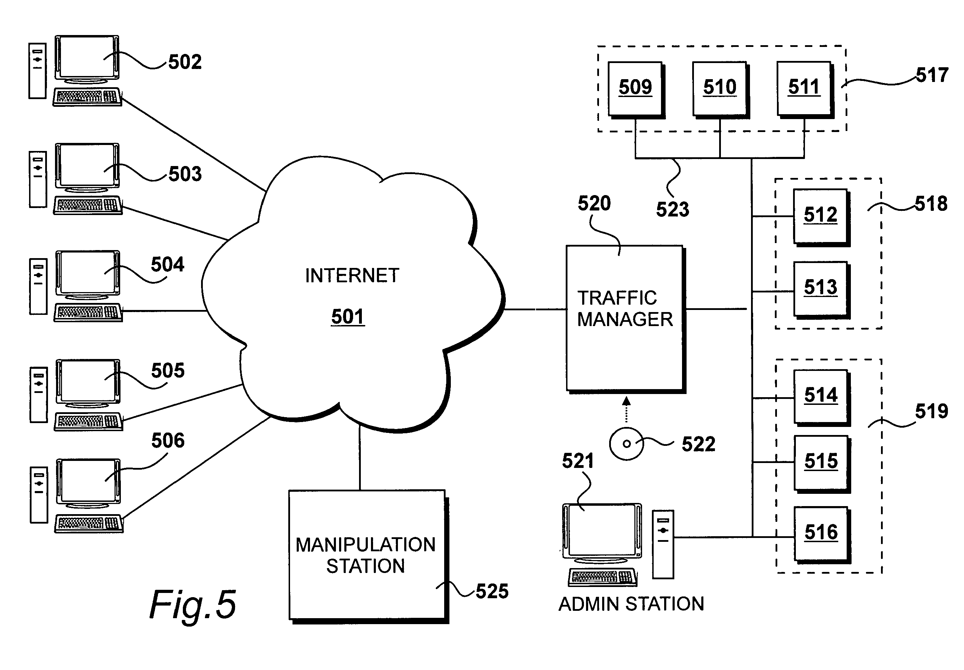

A typical example of a traffic management apparatus is shown in Figure 5 in which communications between servers and clients are provided by the Internet 501. Five clients 502 to 506 are shown, although it should be appreciated that this is merely representative of the many thousands of clients requesting data from servers. These clients include personal computers equipped with email and browsing software. Client devices also include mobile wireless communication devices such as portable computers, personal digital assistants and sophisticated mobile telephones.

Physical serving devices (servers) 509 to 516 are organised in three server pools 517, 518 and 519. In this example, the first pool 617 is for secure servers running secure protocols suitable for online sales and other secure transactions. Server pool 518 provides web pages and the third pool 519 is dedicated to electronic mail communications. However, it should be appreciated that this merely represents an example and that many configurations of this type are possible.

A traffic management system 520 monitors client requests and directs requests to an appropriate server pool. To do this, the system is provided with functionality enabling it to analyse client requests in detail. Furthermore, additional operations are carried out by the traffic management system (during and after request analysis) in order to maintain a high number of simultaneously connected clients without overloading any of the servers 509 to 516.

In order to facilitate the configuration of the servers and the traffic management system 520, an administration station 521 is provided, having human interface peripheral equipment including a monitor and a keyboard etc. A data carrying medium such as a DVD 522 is illustrated as a means for supplying executable instructions for the traffic managing process to a traffic manager platform. Alternatively, traffic managing instructions may be loaded onto the traffic management system from the Internet and the transfer of such instructions may be controlled via the administration system 521. A network 523 connects the servers 509 to 516 with a traffic management system 520 and to the Internet. Thus, in this embodiment, the traffic management system is implemented by a programmable platform having executable instructions installed thereon.

The example also shows the provision of a manipulation station 525 which may be provided within the environment of the traffic manager 520 or communication may take place over a substantial distance via an Internet connection, as illustrated in Figure 5. The manipulation station represents an alternative environment to that of the traffic manager 520 and communication between the traffic manager 520 and the manipulation station 525 takes place using Internet protocol (TCP/IP) thereby allowing each environment to be developed independently. Thus, an environment provided at manipulation station 125 may be configured to facilitate the data compression procedures required by an aspect of the present invention.

The servers 509 to 516 are each configured to supply web page data to a plurality of requesting clients or to facilitate the transmission of electronic mail communications. The traffic manager 520 is configured to receive requests from clients and to select one of the serving devices for satisfying the requirements of that request. In a preferred embodiment, when data compression is required, the traffic manager 520 supplies a function call to the data manipulation station 525 that includes the original non-compressed data file. The manipulation station 525 manipulates the original data file so as to produce manipulated data in the form of a compressed file which is then returned to the traffic manager 120. In a preferred embodiment, the whole of the communication including the original email and all attachments are supplied to the manipulation station which then invokes all measures, including file selection and compression such that a modified electronic communication with compressed attachments is returned to the traffic manager. Alternatively, the manipulation station is used to perform compression upon selected files.

### Figure 6

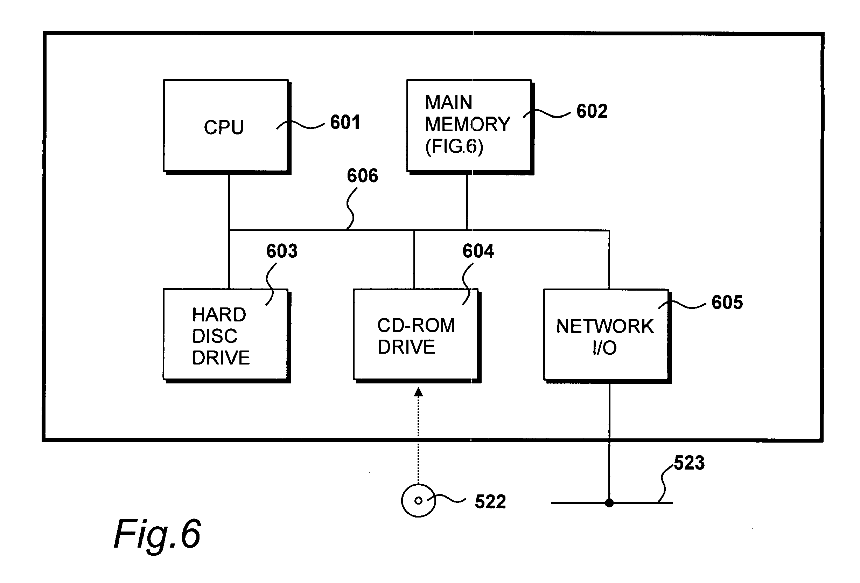

Instructions for the implementation of traffic management are executed on a hardware platform such as that illustrated in Figure 6. The traffic management platform is controlled by the administration system 521 and therefore does not require its own output monitor or input keyboard. Typically, hardware of this type is in the form of a rack mounted unit and several such units may be provided within a rack so as to provide a degree of redundancy in case of hardware failure. It should also be appreciated that servers 509 to 516 may be configured in a similar fashion either locally, at an alternative site or distributed globally.

A central processing unit 601 is provided along with memory devices 602 to facilitate the storage of instructions and data that allows regular access while the system is in operation. A hard disc drive 603 is included to provide non-volatile storage of instructions and configuration data. Disc 603 also provides access to infrequently used data during operation. Upon system initialisation, configuration files and executable instructions are loaded from disc drive 603 and stored in main memory 602.

For the optional loading of traffic managing instructions from data carrying media, a DVD drive 604 is provided and is configured to receive instructions from an instruction carrying medium such as DVD disc 522. In addition, one or more network connections are provided by at least one network interface 605 thereby allowing the traffic management system to connect to the local network 523 and to the Internet. Internally, devices 601 to 605 are connected via a data bus 206.

### Figure 7

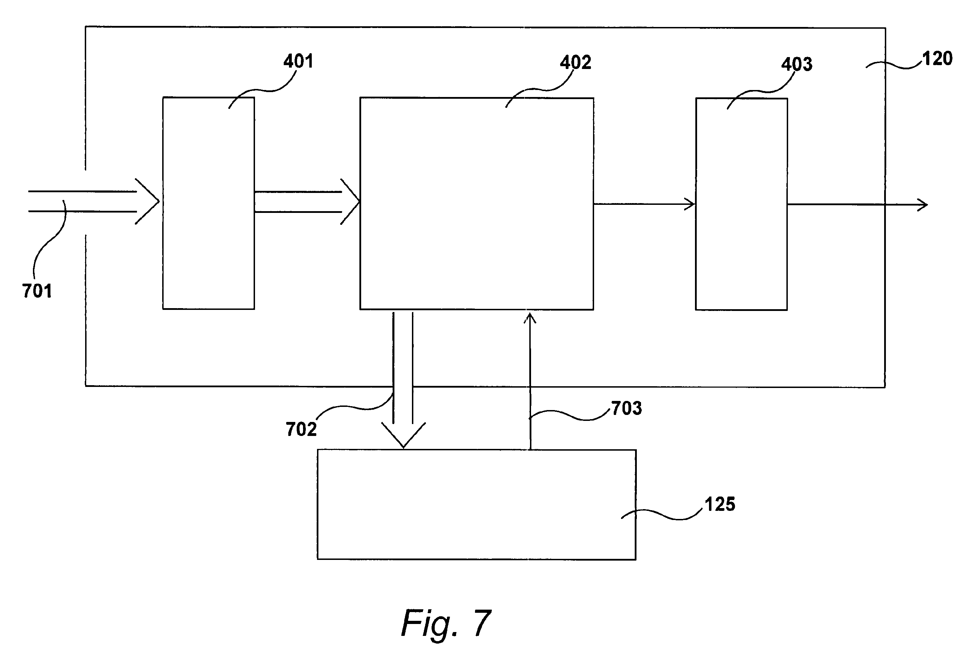

Functionality of the environment illustrated in Figure 5 is shown in Figure 7. At the traffic manager 120 an input communication 701 is received at input device 401 which in turn conveys this communication to processing device 402. Processing device 402 considers attachments and makes selections for attachments that may be compressed. On identifying an attachment that may be compressed, the attachment is supplied to manipulation station 125 as illustrated by high bandwidth communication 702. At the manipulation station 125 (possibly running a Java application to effect compression) the file is compressed and returned to the processing device 402 as illustrated by low bandwidth communication 703. Thereafter, processing device 402 is configured to assemble a modified electronic communication having, where appropriate, compressed attachments.

### Figure 8

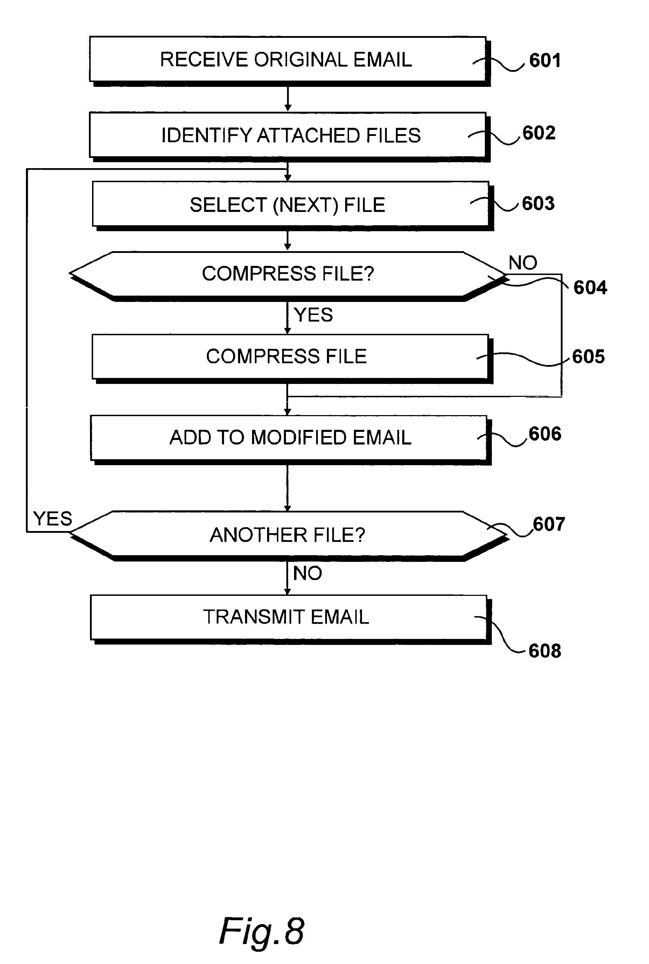

Procedures performed within the embodiment of Figure 7 are detailed in Figure 8.

At step 801 an original email is received and at step 802 attached files are identified. Attached files may be identified by scanning through the received data or reading emails to identify tags or flags pointing to the existence of attachments.

At step 803 files are selected to determine their appropriateness for compression such that a question may be asked at step 804 as to whether the file is to be compressed. Thus, it is appreciated that in some instances little will be gained from performing a file compression and that a selection should be made when an advantage can be obtained from performing the compression exercise. Thus, files for compression are not selected if the file has already undergone a degree of compression or has been stored in a format where high levels of compression are inherent. Thus, it would be highly desirable to compress Bitmap data but little would be gained from compressing JPEG data for example.

When a file has been selected for compression, a compression process is performed at step 805. The actual nature of the compression procedure may take many forms and advantages can be gained from selecting compression procedures readily available and in the public domain. The compression procedures may be performed locally but given the availability of Java applications for performing compression techniques, a preferred embodiment involves making a call to the external manipulation station as described with respect to Figure 7.

At step 806 a modified electronic mail communication is assembled which preferably receives compressed files via step 805 or, alternatively, when the question asked at step 804 is answered in the negative to the effect that it is not desirable to compress the file, the modified email assembled at step 806 includes the original attachment without further compression taking place.

At step 807 a question is asked as to whether another file is to be considered and when answered in the affirmative a further selection is made at step 803.

Eventually, all of the files will have been considered resulting in the question asked at step 807 being answered in the negative and the modified email being transmitted at step 808.

## Claims

1. A traffic management apparatus for connection within a data transmission network so as to manage the distribution of data traffic between a plurality of data serving and data relaying devices, **characterised by**:
an input device configured to receive an original electronic mail communications, some of which have file attachments;
a processing device configured to identify one or more file attachments, select one or more of said identified attachments for compression, compress said selected attachment or attachments and replace said selected attachments with said compressed attachments to produce a modified communication; and
an output device for conveying the modified electronic mail communication with the compressed attachment to a receiving server.

2. The apparatus as claimed in claim 1, **characterised in that** said input device receives an original communication from an electronic mail originator and said receiving server is a server that provides electronic mail services to said originator.

3. The apparatus as claimed in claim 1, **characterised in that** said input device receives a communication from a server that provides electronic mail services to an originator and the output device supplies a modified communication to a second electronic mail server.

4. The apparatus as claimed in claim 1, **characterised in that** said output device supplies the modified communication to an electronic mail server that provides electronic mail services to a recipient.

5. The apparatus as claimed in claim 1, **characterised in that** said processing device is configured to select attachments for compression when they are identified as being in a non-compressed format.

6. The apparatus as claimed in claim 1, **characterised in that** said processing device is configured to select attachments for compression when they are identified as executable files.

7. A method of facilitating the transmission of electronic mail communications through a distributed network such as the Internet, **characterised by** the steps of:
receiving an original electronic mail communications at a first location within said distributed network;
identifying data files attached to said electronic mail communications at said first location;
selecting one or more of the identified attachments for compression;
compressing the selected attachments;
replacing the selected attachments in the original communication with the compressed attachments to produce a modified communication; and
transmitting said modified communication to a second location within the network.

8. The method as claimed in claim 7, **characterised by** selectively compressing an attachment based on the format type of the attachment.

9. The method as claimed in claim 8, **characterised by** reading data contained within the email to identify the format of attachments.

10. The method as claimed in claim 8, **characterised by** compressing attachments when a substantial degree of compression can be achieved.

11. The method as claimed in claim 8, **characterised by** the step of compressing executable files.

12. The method as claimed in claim 11, **characterised by** the addition of a warning notice in the body of an email when an executable attachment has been compressed.

13. A computer-readable medium having computer-readable instructions executable by a computer, such that when executing said instructions a computer will perform the steps of:
receiving an original electronic mail communications at a first location within said distributed network;
identifying data files attached to said electronic mail communications at said first location;
selecting one or more of the identified attachments for compression;
compressing the selected attachments;
replacing the selected attachments in the original communication with the compressed attachments to produce a modified communication; and
transmitting said modified communication to a second location within the network.

14. The computer-readable medium as claimed in claim 13, **characterised in that** the computer will also perform the step of compressing attachments when a substantial degree of compression can be achieved.

15. The computer-readable medium as claimed in claim 13, **characterised in that** the computer will also perform the step of compressing executable files and adding a notice to the email confirming that an executable file is attached.
